# EUROPÄISCHE PATENTSCHRIFT

(11) **EP 3 041 392 B1**
(45) Veröffentlichungstag und Bekanntmachung des Hinweises auf die Patenterteilung: **20.12.2017**
(21) Anmeldenummer: 14776813.9
(22) Anmeldetag: 03.09.2014
(51) Int. Cl.: A47J 37/07

(54) **GRILLVORRICHTUNG**
GRILLING APPLIANCE
SYSTÈME DE GRILL

(30) Priorität: 03.09.2013 DE 102013014540
(43) Veröffentlichungstag der Anmeldung: 13.07.2016
(73) Patentinhaber: Metallwarenfabrik Marktoberdorf GmbH & Co. KG, 87616 Marktoberdorf (DE)
(72) Erfinder: HEMMERS, Carsten, 48529 Nordhorn (DE)
(74) Vertreter: Tiesmeyer, Johannes
(86) Internationale Anmeldenummer: PCT/EP2014/002385
(87) Internationale Veröffentlichungsnummer: WO 2015/032493

(56) Entgegenhaltungen:
- DE-A1- 2 926 540
- DE-A1- 19 751 893
- DE-U1-202004 017 817
- US-A- 3 682 154

## Beschreibung

Die vorliegende Erfindung betrifft eine Grillvorrichtung mit einer Holzkohlekammer, deren Wandungen einen Innenraum für Holzkohle vollständig umschließen, mit mindestens einer Wandung aus feinmaschigem Sieb und mit mindestens einer Belüftungsöffnung, in die eine Luftversorgungsleitung mündet, die durch eine Anbrennkammer für Zündmittel hindurchführt und an die ein Luftstromerzeuger anschließbar oder angeschlossen ist, und mit einer Reflektorschale und mit einer Außenschale, in der die Reflektorschale (vorzugsweise mindestens bereichsweise um einen Luftraum von der Außenschale beabstandet) angeordnet ist, und mit einem Grillrost, der die Außenschale oberseitig abdeckt.

Feuer und Glut dienen dem Menschen seit langem als Wärmequelle, insbesondere auch zum Kochen. Vielfältig hat die Technik der modernen Gesellschaft zu diesen Zwecken Vorrichtungen und Verfahren weitergebildet. Überdies können wir Menschen uns auch weiterhin der Faszination von Glut und Feuer nicht entziehen. Die Wärme eines Holzfeuers finden wir behaglich, und an schönen Tagen ist das Grillen eine ausgesprochen beliebte Freizeitbeschäftigung.

Das Gebrauchsmuster DE 202004017817 U1 beschreibt eine Wärmequelle mit einer Holzkohlekammer, mit einer Wandung aus feinmaschigem Sieb und mit mindestens einer Belüftungsöffnung, in die eine Luftversorgungsleitung mündet, an die ein Luftstromerzeuger, insbesondere ein Gebläse, anschließbar oder angeschlossen ist, sowie einer Reflektorschale, in der die Holzkohlekammer angeordnet ist, sowie einer Außenschale, in der die Reflektorschale und die Holzkohlekammer angeordnet sind.

Nachteilig bei dieser Vorrichtung ist die recht aufwändige Herstellung, der große Platzbedarf der Vorrichtung zum Beispiel beim Verstauen und der Reinigungsaufwand für die vielen Teile.

Der vorliegenden Erfindung liegt die Aufgabe zugrunde, eine Grillvorrichtung der eingangs genannten Art zu schaffen, die in ihrer Handhabung verbessert ist.

Diese Aufgabe wird von einer Vorrichtung mit den Merkmalen des Anspruchs 1 gelöst. Bevorzugte Ausgestaltungen sind in den Unteransprüchen angegeben.

Erfindungsgemäß ist eine Vorrichtung zum gerichteten Erzeugen von Wärme dadurch gekennzeichnet, dass Holzkohle oder ein anderer kohleartiger Brennstoff, der sich zum Beispiel durch Pyrolyse oder Kalzinieren herstellen lässt (im Folgenden bespielhaft immer nur mit "Holzkohle" bezeichnet) sich in einer im wesentlichen abgeschlossenen Holzkohlekammer oder Glutkammer glühend halten lässt. Durch die im wesentlichen abgeschlossene Glutkammer kann die glühende Holzkohle so sicher umschlossen sein, dass die Glutkammer sogar umkippen kann, ohne dass heraus fallende Glut die Umgebung gefährdet. Außerdem bewirkt die im wesentlichen abgeschlossene Glutkammer aber auch, dass die Wärmeabstrahlung der Glut überwiegend durch eine feinmaschig siebartige Wandung (Siebweite insbesondere < 1 mm) der Glutkammer gerichtet wird, wobei die feinmaschig siebartige Wandung der Glutkammer unterhalb eines Grillrosts einer Grillvorrichtung angeordnet ist. Selbst wenn die Glutkammer zum Beispiel aus Blech (zum Beispiel Edelstahl oder Weißblech) hergestellt ist und sich daher selbst erwärmt und Wärme transportiert, wird das feinmaschige Sieb Wärme in noch größerer Menge durch lassen. Dadurch dass der Stückdurchmesser der Holzkohle in der Glutkammer vorzugsweise im wesentlichen unter 25 mm liegt, ist die Holzkohle recht einfach und schnell (mit geringer Energie) zu entfachen. Auch kann für diese Stückgröße der Holzkohle eine sehr handliche Glutkammer, ausgebildet werden. Die Glutkammer ist vorzugsweise mit einer Holzkohleportion von ungefähr 150 Gramm gefüllt. Dies kann - bedingt durch eine vorzugsweise steuerbare Luftströmung, die von einem Gebläse mittels einer Luftversorgungsleitung durch eine Belüftungsöffnung in die Glutkammer eingeleitet werden kann, für eine Glutdauer von ungefähr 30 bis 60 Minuten reichen.

Andere Größen der Glutkammer sind erfindungsgemäß denkbar. Das Volumen und die Ausgestaltung der Glutkammer kann demzufolge variabel auf veränderte Anforderungen und/oder Aufgabenstellungen und der gewünschten Brenndauer entsprechend ausbildet oder angepasst werden. Die Glutkammer im System kann also auch größer oder kleiner sein.

Besonders bevorzugt ist für das erfindungsgemäße Verfahren Holzkohle, die folgende Bestandteile aufweist: 40 % bis 60 % der Kohle mit einem Stückdurchmesser von 5 mm bis 20 mm, 40 % bis 60 % der Kohle mit einem Stückdurchmesser von 20 mm bis 25 mm, sowie ein Rest von kleineren Bruchstücken und Staub, die zum Beispiel beim Transport entstehen. Darin erleichtert die Hälfte der Kohle mit den kleineren Stücken das Entzünden, während die andere Hälfte der Kohle mit den größeren Stücken die Dauer der Glut fördert.

Die Glut in der Holzkohlekammer oder Glutkammer lässt sich durch das Zuführen der Luftströmung in die Glutkammer verstärken. Wenn also erfindungsgemäß mittels insbesondere eines Elektrogebläses - oder auch zum Beispiel mittels eines Handkurbel-betriebenen Gebläses, um unabhängig von elektrischer Energie zu sein - die Glut angeblasen wird, wird die Glut heißer, und die abgestrahlte Energie nimmt zu. Sobald die Luftströmung wieder beendet wird, "schläft die Glut ein", sie erkaltet, ohne allerdings völlig zu erlöschen, und lässt sich daher durch erneute Luftzuführung auch wieder zu größerer Hitze entfachen. Besonders bevorzugt ist es, die Stärke der Luftströmung einzustellen - sei es zum Beispiel durch das Einstellen einer höheren Gebläsestufe oder durch schnelleres Kurbeln, wobei eine stufenlose Einstellbarkeit der elektrischen Gebläseleistung besonders bevorzugt ist.

Besonders bevorzugt ist es ferner, die Glut in der Glutkammer durch ein Zündmittel zu entfachen, das in der Nähe der Holzkohle gezündet oder entzündet wird und dessen Hitze insgesamt mittels einer Luftströmung - insbesondere der Luftströmung des Gebläses, mit der sich auch die Glut verstärken lässt - zur Holzkohle in die Glutkammer geleitet wird. Das Zündmittel kann zum Beispiel nach Art von Streichholzköpfen sein, allerdings in größerer Menge dieses Materials. Das Zündmittel wird vorzugsweise in einer Zündkammer benachbart zur Glutkammer vorzugsweise nahe bei der Holzkohle gezündet, und die Hitze des Zündmittels wird der Holzkohle zugeleitet. Besonders bevorzugt ist Brenngel oder -paste. Aber auch andere bekannte leicht entflammbare - feste, pyrotechnische oder flüssige - Substanzen und Gemische sind als Zündmittel denkbar. So hat sich zum Beispiel - auch geraspeltes - Parafin als geeignet angezeigt. Insbesondere ist erfindungsgemäß vorteilhaft, dass aufgrund des geringen Energiebedarfs zum Entfachen der Holzkohle eine kleine Menge Zündmittel genügt.

Die Grillvorrichtung umfasst vorzugsweise eine zylindrische Holzkohlekammer mit einer im Wesentlichen ebenen oberseitigen Abdeckung aus Blech möglicherweise mit einigen Löchern, einem feinmaschigen Sieb als "Zylindermantelfläche", einem im Wesentlichen ebenen unterseitigen Boden aus Blech sowie mindestens einer Belüftungsöffnung in dem Boden.

In die Belüftungsöffnung der Holzkohlekammer mündet von außerhalb der Holzkohlekammer eine Luftversorgungsleitung, an die der Luftstromerzeuger anschließbar oder angeschlossen ist. Als solcher ist zum Beispiel sogar ein Fön von außen auf die Luftversorgungsleitung aufsteckbar. Ein Gebläse kann aber auch direkt in die Vorrichtung integriert oder eingebaut sein und so die Luftversorgungsleitung mit einer Luftströmung versorgen.

Die Grillvorrichtung weist auch eine Zündkammer für ein Zündmittel auf, wie es oben schon beschrieben ist. Die Zündkammer ist vorzugsweise nahe bei der Holzkohlekammer angeordnet (oder sogar in diese integriert) und mündet durch mindestens eine Zündöffnung vorzugsweise in einen unteren Bereich der Holzkohlekammer. Bevorzugt sind allerdings mehrere Zündöffnungen, durch die die von dem entflammten Zündmittel erhitzte Luft in die Holzkohle geleitet wird, um diese zu entfachen.

Besonders bevorzugt verläuft die Luftversorgungsleitung durch die Zündkammer hindurch. Dann können nämlich die Belüftungsöffnungen (oder gegebenenfalls die eine), die aus der Luftversorgungsleitung in die Holzkohlekammer hinein führen, auch als Zündöffnungen dienen. Außerdem kann die von außen durch die Luftversorgungsleitung geleitete Luftströmung zum Einen beim Entfachen der Glut dazu dienen, die Hitze des Zündmittels zur Holzkohle zu leiten, sowie zum Anderen später dazu, die Hitze der Glut zu verstärken, wenn die Holzkohle einmal entfacht ist.

In der Zündkammer ist vorzugsweise eine Pfanne für das Zündmittel angeordnet. Wenn die Luftversorgungsleitung durch die Zündkammer hindurch verläuft, wird diese Pfanne von der Luftströmung aus der Luftversorgungsleitung vorzugsweise nicht direkt durchströmt, sondern durchwirbelt. Dies erfolgt zum Beispiel dadurch, dass die Luftströmung von unten durch eine Öffnung in der Pfannenmitte in die Zündkammer eingeleitet wird und dann aber nach oben durch mehrere auf Umfängen um die Pfannenmitte verteilte Öffnungen - also auf einem zumindest etwa zweimal seine Richtung ändernden Weg - die Zündkammer wieder verlässt. Diese Pfanne eignet sich insbesondere zum Ablegen kleiner Stränge von Brennpaste aus einer Brennpastentube. Vorzugsweise ist die Luftleitung unter der Holzkohlekammer zu einer flachen Kammer als Zündkammer vergrößert, auf der die Holzkohlekammer steht.

Mit der erfindungsgemäßen Grillvorrichtung lassen sich Nahrungsmittel, wie zum Beispiel Fleisch oder Fisch garen. So weist die erfindungsgemäße Grillvorrichtung einen im wesentlichen horizontalen Grillrost auf, unter dem sich die zylindrische Holzkohlekammer vorzugsweise mit im Wesentlichen ebener oberseitiger Abdeckung aus Blech möglicherweise mit einigen Löchern, einem feinmaschigen Sieb als "Zylindermantelfläche" und einem im Wesentlichen ebenen unterseitigen Boden aus Blech befindet. Vorzugsweise gibt es zwischen der Holzkohlekammer und dem Grillrost einen Abstand von 0 bis 5 cm - der Grillrost kann sich also auch auf der Oberseite der Holzkohlekammer direkt abstützen.

Die Holzkohlekammer ist erfindungsgemäß in einer Reflektorschale und diese in einer Außenschale enthalten, die die Reflektorschale, vorzugsweise um einen Luftraum beabstandet, umschließt. Dadurch wird die Außenschale außenseitig nicht heiß. Auch bei versehentlichem Berühren besteht daher dort keine Verbrennungsgefahr. Vorzugsweise ist die Luftleitung unter der Reflektorschale (insbesondere zwischen Reflektorschale und Außenschale) durch diesen beabstandenden Luftraum gebildet. Die dort hindurch geleitete Luftströmung kühlt diesen Bereich (insbesondere die Reflektorschale und Außenschale) zusätzlich und unterstützt auf diese Weise vorteilhaft den Effekt, dass Reflektorschale und Außenschale aus hitzeempfindlichem Werkstoff hergestellt sein können und dass die Außenschale auf wärmeempfindlichen Untergründen abgestellt werden kann, weil sie sich unterseitig kaum oder sogar überhaupt nicht erwärmt.

Die Außenschale kann aus einem Werkstoff gebildet, der schon bei einer Temperatur von auch unter 200°C schon verbrennt oder verkohlt, nämlich insbesondere aus Kunststoff, Holz, Papier und/oder Pappe. Der Luftraum ist nämlich so dimensioniert, dass die Innenwand der Außenschale nirgends heißer wird als 180°C, insbesondere nicht als 120°C, insbesondere nicht als 80°C. Diese Werkstoffe der Außenschale ermöglichen eine besonders billige Herstellung. Aus Pappe oder Papierwerkstoff ist die Außenschale sogar bedruckbar und folglich sogar als Werbeträger und Werbemittel besonders geeignet. Besonders kostengünstig wird die Herstellung, wenn die Außenschale als ein (insbesondere mit quadratischem Grundriss quaderförmiger) Pappkarton ohne Deckel ausgebildet ist. Oder ein Deckel kann nach Art eines Schuhkartons abnehmbar oder entlang einer Kante zur Seite klappbar sein, um dort im Gebrauch den Grillrost platziert zu haben oder platziert zu bekommen.

Erfindungsgemäß ist die Reflektorschale aus flexiblem Flachmaterial mit einer Wärme-reflektierenden Innenseite (Metallfolienschicht oder -bedampfung) - vorzugsweise aus Metallfolie wie zum Beispiel Alufolie. Flexibel heißt hier, dass sich das Flachmaterial von Hand oder vorzugsweise sogar mit einem Finger ohne weiteres Werkzeug sichtbar (elastisch oder plastisch) verformen lässt, wie es zum Beispiel bei Alufolie der Fall ist. Dieses Merkmal kann den Herstellungspreis wiederum beträchtlich senken. Und erlaubt sogar, die Reflektorschale als "Wegwerf-" oder "Einmal-Artikel" anzubieten. Da die vorzugsweise trichterförmige Reflektorschale insbesondere auch dazu dienen kann, die von der Holzkohlekammer abgestrahlte Wärme (etwa nach Art und Anordnung eines Parabolspiegels) in Richtung der Unterseite des Grillrostes zu reflektieren, befindet sich die Reflektorschale im Wesentlichen unter der gesamten Unterseite des Grillrosts. Von dort herabtropfendes Fett und sonstiges Herabfallendes landet folglich insbesondere fast immer auf der Reflektorschale - so dass deren Entsorgen nach dem Grillen ihre Ausgestaltung als Einmalartikel besonders vorteilhaft macht.

Dieser letztgenannte Aspekt ist auch für eine Ausgestaltung der Erfindung bedeutungsvoll, bei der die Reflektorschale und der Grillrost beide als Einmalartikel ausgebildet sind, so dass auch das oft mühsame Reinigen des Grillrosts entfällt. Dabei können Reflektorschale und Grillrost auch als ein Bauteil oder eine Montageeinheit aneinander befestigt oder sogar einstückig (etwa aus einem Stück Alufolie, aus dem der GrillrostBereich dann als Streckblech geschnitten und umgeformt ist) ausgebildet sein.

Alternativ kann die Reflektorschale aber auch dadurch erfindungsgemäß "in der Außenschale" gebildet sein, dass die Außenschale mit der Reflektorschale direkt beschichtet ist, die Reflektorschale also mindestens bereichsweise die innenseitige Außenschicht der Außenschale bildet. Dazu kann die Außenschale zum Beispiel mit Aluminium als einem hitzereflektierenden Material bedampft, beklebt oder sonstwie beschichtet sein.

Besonders bevorzugt ist die Holzkohlekammer herausnehmbar. Wenn dann die Reflektorschale und die Außenschale flach zusammenlegbar sind (die Außenschale als Pappkarton zum Beispiel in einer der vielen herkömmlichen Weisen zusammenfaltbar und die Reflektorschale aus Alufolie flach zusammenfaltbar und/oder zusammenknitterbar), ergibt sich eine sehr platzsparend transportable, also noch kostengünstigere Vorrichtung. Dabei kann die Reflektorschale trichterförmig sein, insbesondere ebene Wandungen aus dem flexiblem Flachmaterial aufweisen, die zusammen pyramidenförmig ausgebildet sind, und zum Beispiel schlicht flach zusammendrückbar (und dabei wie schon gesagt ungeordnete, aber auch vorgefaltete Falten schlagen) und einfach wieder auseinander ziehbar sein.

Der Grillrost liegt dann oberhalb der Holzkohlekammer vorzugsweise auf der Außenschale und/oder der Reflektorschale - bildet sozusagen deren Deckel auf deren oberem Rand. Der Grillrost kann an der Außenschale dann besonders bevorzugt (lösbar) befestigt sein, so dass sogar ein Umkippen kaum noch eine Verbrennungsgefahr bedeutet, weil die Grillvorrichtung als eine Baueinheit zusammen bleibt, wenn der Reflektor und die Glutkammer bezüglich der Außenschale ebenfalls (lösbar) befestigt sind - und die glühende Holzkohle in der Glutkammer erfindungsgemäß ohnehin sicher umschlossen am Herausfallen gehindert ist.

Insgesamt ergibt sich erfindungsgemäß also eine Wärmequelle oder eine Grillvorrichtung, die sauber, sicher und schnell bedienbar und besonders preiswert herstellbar ist.

Die Holzkohlekammer mit Sieb und Holzkohleportion gegebenenfalls einschließlich unterseitig angebrachter Lufteinlässe und/oder die Zündkammer mit Zündmittel (auch Holzkohlekammer und Zündkammer zusammen) können als vorgefertigtes Wechselmodul ausgebildet sein, und zwar insbesondere als vorgefertigter Einmalartikel.

Weitere Vorteile, Ausgestaltungen und Details der Erfindung werden im Folgenden mit Bezug auf die beigefügten Abbildungen beschrieben: Die
- ***Figur***: zeigt eine geschnittene Seitenansicht einer erfindungsgemäßen Grillvorrichtung.

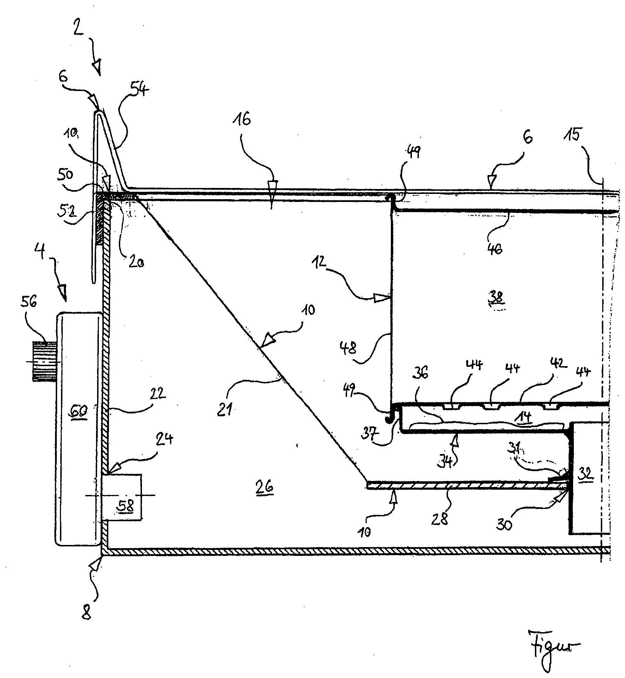

Der Grill 2 gemäß der Figur besteht im Wesentlichen nur aus folgender separater Komponente sowie im Übrigen folgenden Materialien: einem separaten aufsteckbaren, batteriegetriebenen Gebläse 4 sowie: aus Streckmetall (Grillrost 6), aus Pappe (Außenschale 8, und Rand 50 und Boden 28 der Reflektorschale 10), aus Alufolie (Reflektorschale 10) und aus feinmaschigem Sieb 48 (Seitenwand 48 der Holzkohlekammer 12) und dünnem Blech (zum Beispiel Zündkammer 14 und Dach 46 und Boden 42 der Holzkohlekammer 12). Wegen fertigungstechnischer Einfachheit und Kosten und wegen simpler Montierbarkeit sind die gewählten Dimension symmetrisch (entlang der Symmetrieachse 15; nur die linke Hälfte der symmetrischen Vorrichtung 2 ist abgebildet): die Außenschale 8 in Gestalt eines Pappkartons mit quadratischem Grundriss und die (auf dem Kopf stehend) pyramidenförmige Reflektorschale 10 aus flexibler Alufolie mit im Wesentlichen demselben Quadrat als oberer Öffnung 16 wie die Außenschale 8. Der Grillrost 6 liegt oberhalb der Holzkohlekammer 12 auf der Außenschale 8 und der Reflektorschale 10 - bildet sozusagen deren Deckel auf deren oberem Rand 20, 50.

Die Reflektorschale 10 und die Außenschale 8 sind flach zusammenlegbar. Die Außenschale 8 als Pappkarton ist in einer der vielen (aus der Kartonage-Technik) bekannten Weisen zusammenfaltbar (nicht dargestellt), was Transport und Lagerhaltung des Produkts massiv erleichtert. Und die Reflektorschale 10 ist in ihrem pyramidenförmigen Bereich 21 aus Alufolie schlicht flach zusammendrückbar (schlägt dabei ungeordnete Falten) und ist dann wieder auseinander ziehbar. Mit so flach gedrückter Reflektorschale 10 können nach dem ersten Auseinanderfalten des Außenschale 8 übrigens sämtliche Elemente des Grills 2 in der Außenschale untergebracht und transportiert werden.

Nun soll der funktionale Aufbau des Grills 2 im Betrieb mit Kohle erklärt werden.

In einer Wandung 22 der Außenschale 8 ist ein erster Durchbruch 24 ausgebildet. Von außen in den Durchbruch 24 ist ein Verbrennungsluftstromerzeuger 4 (zur Erzeugung eines Verbrennungsluftstroms durch die Luftversorgungsleitung 26) aufgesteckt. Der Durchbruch 24 mündet in eine Luftversorgungsleitung 26, die dort am Boden der Vorrichtung 2 in ihrem anfänglichen Verlauf vom gesamten Volumen 26 zwischen der Außenschale 8 und der Reflektorschale 10 gebildet wird. Zum weiteren Verlauf der Luftversorgungsleitung 26 befindet sich in der Mitte des Bodens 28 der Reflektorschale 10 ein zweiter Durchbruch 30. Dort hinein gesteckt (und zum Beispiel durch einen Blechkragen 31 oder einen Bajonettverschluss (nicht dargestellt) gegen Durchrutschen und Verkippen gesichert) ist ein senkrechtes Luftversorgungsrohr 32 aus Blech, das unterseitig in die Mitte einer Blechpfanne 34 aus Blech für Zündmittel 36 als Zündkammer 34 mündet.

Die Blechpfanne 34 dient der Aufnahme einer Menge einer Anbrennhilfe 36 - kleiner Stränge von Brennpaste 36 aus einer Brennpastentube (nicht dargestellt). Diese Blechpfanne 34 nimmt aber auf ihrem im Wesentlichen senkrechten Rand 37 auch die Holzkohlekammer 12 auf, so dass der Boden der Holzkohlekammer 12 zugleich das Dach der Zündkammer 34 bildet. Die Holzkohlekammer 12 umschließt einen Verbrennungsraum 38, in dem sich eine Holzkohleschüttung (nicht dargestellt) befindet. Um die Luftströmung durch die Zündkammer 14 in die Holzkohlekammer 12 wie oben beschrieben verwirbelt einzuleiten, hat die Holzkohlekammer 12 in ihrem Boden 42 aus Blech mehrere Belüftungsöffnungen 44, die auf Umfängen um die Mitte der Zündpfanne 34 verteilt sind.

Die Holzkohlekammer 12 ist kreiszylindrisch mit einer ebenen oberseitigen Abdeckung 46 aus Blech, einem feinmaschigen Sieb 48 als "Zylindermantelfläche", durch das die Hitze der darin glühenden Kohle (nicht dargestellt) seitlich abgestrahlt wird (um dann vom pyramidenförmigen Bereich 21 aus Alufolie der Reflektorschale 10 in Richtung Grillrost reflektiert zu werden), und dem ebenen unterseitigen Boden 42 aus Blech mit der Belüftungsöffnung 44. Abdeckung 46 und Boden 42 sind wie kreisrunde Blechdosendeckel (nämlich mit senkrechtem Steckrand 49) auf die Zylindermantelfläche 48 aus feinmaschigem Sieb 48 aufgesteckt.

Damit ist der Verbrennungsraum 38 mechanisch fest und sicher abgeschlossen. Es ist auch bei Ankippen oder gar Umkippen oder Umfallen der Grillvorrichtung 2 ein Herausfallen der Holzkohleschüttung (nicht dargestellt) samt der darin möglicherweise enthaltenen gefährlichen Glut aus dem Verbrennungsraum 38 quasi unmöglich, denn die Holzkohlekammer 12 ist zusammen mit der Zündkammer 34 zwischen Grillrost 6 darüber und Reflektorschalenboden 28 darunter eingeklemmt. Und im Betriebszustand der Vorrichtung 2 ist ein Durchsatz von Strahlungswärme durch die Siebwandung 48 in Richtung des reflektierenden Bereichs 21 der Reflektorschale 10 gewährleistet. Erfindungsgemäß verhindert diese Ausbildung des Flammensiebs 48 auch gefürchteten Funkenflug.

Auf dem Rand 20 der Außenschale 8 ist der Steckrand 50 der Reflektorschale 10 aufgesteckt, und zwar nach Art eines Schuhkartondeckels auf einem Schuhkarton. Ebenso ist der Grillrost 6 aus Streckmetall mit seinem Steckrand 52 auf den Steckrand 50 der Reflektorschale 10 aufgesteckt. Beide Verbindungen können zusätzlich durch vorzugsweise einfache Verschlüsse (nicht dargestellt) gesichert sein wie zum Beispiel durch eingeprägte Schnapp-Erhebungen (nicht dargestellt), die in gegenüberliegende Vertiefungen oder Öffnungen (nicht dargestellt) einschnappen, oder durch Klammern (nicht dargestellt) zum Beispiel aus Blech oder Draht.

Der reflektierende Bereich 21 der Reflektorschale 10 schließlich erstreckt sich als auf dem Kopf stehende Pyramide aus (vier gleichen Flächen) flexibler Alufolie 21 (mit im Wesentlichen demselben Quadrat als oberer Öffnung 16 wie die Außenschale 8) in senkrechter Richtung von ihrem ebenen Boden 28 (aus Pappe, durch den das senkrechte Luftversorgungsrohr 32 hindurch gesteckt ist) bis zum oberen Rand 50 der Außenschale 8.

Die Dimensionierung der Außenschale 8 und der Reflektorschale 10 ist erfindungsgemäß so aufeinander abgestimmt, dass zwischen diesen beiden Schalen der Luftraum 26 realisiert ist. Dadurch ist erreicht, dass Wärme von der Reflektorschale 10 kaum auf die Außenschale 8 übertragen wird, und dass die Reflektoreigenschaften der Reflektorschale 21 zwischen der Siebwandung 48 der Glutkammer 16 und dem Grillrost 6 voll ausgenutzt werden. Dadurch ist wie schon gesagt Erwärmung des Bodens der Außenschale 8 insbesondere auch in der unmittelbaren Umgebung der Glutkammer 12 durch den Luftraum 26 und die Luftströmung darin verhindert. Somit kann diese Vorrichtung 2 sogar auch die Voraussetzungen für den Einsatz in geschlossenen Räumen und sogar direkt auf einem Esstisch erfüllen, sogar auf einer Holztischplatte. Sicherheitsabstand zum Grillrost 6 braucht dann nur noch dem eigenen Wärmeempfinden angepasst zu werden.

Zum Tragen selbst mit auf dem Grillrost 6 aufgelegten Gargut (nicht dargestellt) ist die Vorrichtung 2 an allen Außenseiten der Außenschale 8 für den Benutzer gefahrlos anzufassen, wobei nur der Grillrost 6 an der Oberseite der Grillvorrichtung 2 heiß und nicht zu berühren sind. Eine "Reling" 54 um den Grillrost 6 kann dann zusätzlich sogar das Herunterrollen von Würstchen (nicht dargestellt) verhindern.

Zum Betrieb der abgebildeten Vorrichtung 2 dient der separate, aufsteckbare Verbrennungsluftstromerzeuger 4. Für den Betrieb der Vorrichtung 2 sind nur kleine Verbrennungsluftmengen in Verbrennungsluftströmen niedriger Strömungsgeschwindigkeit erforderlich. Diese sollten jedoch gut einstellbar sein. Eine elegante Lösung eines Verbrennungsluftstromerzeugers ist ein mittels einsetzbarer Batterie (nicht dargestellt) betriebenes Gebläse 4 kleiner Bauart mit Batteriefach, Motor, Welle, Propeller (alles (nicht dargestellt), Drehregler 56 und Luftauslassstutzen 58 integriert in ein Gehäuse 60 aus Kunststoff) - dessen Luftauslassstutzen 58 sich zum Erzeugen des Luftstroms in den ersten Durchbruch 24 der Außenschale 8 hineinstecken lässt.

## Patentansprüche

1. Grillvorrichtung mit
- einer Holzkohlekammer (12), deren Wandungen einen Innenraum für Holzkohle vollständig umschließen, mit mindestens einer Wandung (48) aus feinmaschigem Sieb und mit mindestens einer Belüftungsöffnung (44), in die eine Luftversorgungsleitung (26, 32, 14) mündet, die durch eine Zündkammer (14) für Zündmittel (36) hindurchführt und an die ein Luftstromerzeuger (4) anschließbar oder angeschlossen ist, und mit
- einer Reflektorschale (21), in der die Holzkohlekammer (12) angeordnet ist, mit einer Wärme-reflektierenden Innenseite und mit
- einer Außenschale (8), in der die Reflektorschale (21) angeordnet ist, und mit
- einem Grillrost (6), der die Außenschale (8) oberseitig abdeckt,
**dadurch gekennzeichnet, dass**
die Reflektorschale (21) aus flexiblem Flachmaterial ist.

2. Grillvorrichtung nach dem vorhergehenden Anspruch, **dadurch gekennzeichnet, dass** die Reflektorschale (21) flach zusammenlegbar und/oder flach zusammenknitterbar ist.

3. Grillvorrichtung nach dem vorhergehenden Anspruch, **dadurch gekennzeichnet, dass** die Reflektorschale (21) aus Alufolie besteht und flach zusammenfaltbar ist und/oder zusammenknitterbar.

4. Grillvorrichtung nach einem der vorhergehenden Ansprüche, **dadurch gekennzeichnet, dass** die Reflektorschale (10), ebene Wandungen (21) aus dem flexiblen Flachmaterial aufweist, die zusammen trichterförmig ausgebildet sind.

5. Grillvorrichtung nach einem der vorhergehenden Ansprüche, **dadurch gekennzeichnet, dass** die Außenschale (8) flach zusammenlegbar ist.

6. Grillvorrichtung nach einem der vorhergehenden Ansprüche, **dadurch gekennzeichnet, dass** die Außenschale (8) ein Pappkarton ist.

7. Grillvorrichtung nach einem der vorhergehenden Ansprüche, **dadurch gekennzeichnet, dass** der Luftstromerzeuger (4) an eine Öffnung (24) in der Außenschale (8) anschließbar oder angeschlossen ist und dass ein Zwischenraum (26) zwischen der Außenschale (8) und der Reflektorschale (10) einen Teil der Luftleitung bildet.

8. Grillvorrichtung nach einem der vorhergehenden Ansprüche, **dadurch gekennzeichnet, dass** die Reflektorschale (10) einen im Wesentlichen ebenen Boden (28) aufweist mit einer im Wesentlichen mittigen Durchgangsöffnung (30) und dass ein Abschnitt der Luftversorgungsleitung (32) starr ist und unterseitig in die Zündkammer (14) mündet und von oben in die Durchgangsöffnung (30) steckbar ist.

9. Grillvorrichtung nach einem der vorhergehenden Ansprüche, **dadurch gekennzeichnet, dass** die Reflektorschale (10) einen oberen Rand (50) aufweist, der über den oberen Rand (20) der Außenschale (8) nach Art eines Schuhkartondeckels aufsteckbar ist.

10. Grillvorrichtung nach einem der vorhergehenden Ansprüche, **dadurch gekennzeichnet, dass** der Grillrost (6) aus Streckmetall hergestellt ist und eine emporgefaltete Reling (54) und/oder einen abwärst gefalteten Kragenrand (52) zum Aufstecken auf die Außenschale und/oder die Reflektorschale (10, 50) aufweist.

## Claims

1. Grilling appliance, comprising
- a charcoal chamber (12), the walls of which completely enclose an inner space for charcoal, said chamber comprising at least one wall (48) made of a fine-meshed screen, and at least one ventilation opening (44) into which an air supply pipe (26, 32, 14) opens, which air supply pipe extends through an ignition chamber (14) for an ignition agent (36) and to which pipe an airflow generator (4) can be connected or is connected, and comprising
- a reflector shell (21), in which the charcoal chamber (12) is arranged, having a heat-reflecting inner face, and comprising
- an outer shell (8), in which the reflector shell (21) is arranged, and comprising
- a grilling rack (6) which covers the outer shell (8) on the upper side thereof, **characterised in that** the reflector shell (21) is made of flexible flat material.

2. Grilling appliance according to the preceding claim, **characterised in that** the reflector shell (21) can be folded flat and/or can be creased flat.

3. Grilling appliance according to the preceding claim, **characterised in that** the reflector shell (21) consists of aluminium foil and can be folded flat and/or can be creased flat.

4. Grilling appliance according to any of the preceding claims, **characterised in that** the reflector shell (10) comprises planar walls (21) that are made of the flexible flat material and, together, are funnel-shaped.

5. Grilling appliance according to any of the preceding claims, **characterised in that** the outer shell (8) can be folded flat.

6. Grilling appliance according to any of the preceding claims, **characterised in that** the outer shell (8) is a cardboard box.

7. Grilling appliance according to any of the preceding claims, **characterised in that** the airflow generator (4) can be connected to or is connected to an opening (24) in the outer shell (8), and **in that** a space (26) between the outer shell (8) and the reflector shell (10) forms part of the air pipe.

8. Grilling appliance according to any of the preceding claims, **characterised in that** the reflector shell (10) comprises a substantially planar base (28) comprising a substantially central through-opening (30), and **in that** a portion of the air supply pipe (32) is rigid and opens at the bottom into the ignition chamber (14) and can be inserted into the through-opening (30) from above.

9. Grilling appliance according to any of the preceding claims, **characterised in that** the reflector shell (10) has an upper rim (50) that can be placed over the upper rim (20) of the outer shell (8) in the manner of a shoebox lid.

10. Grilling appliance according to any of the preceding claims, **characterised in that** the grilling rack (6) is made of expanded metal and comprises an upwardly folded rail (54) and/or a downwardly folded collar rim (52) for placing onto the outer shell and/or the reflector shell (10, 50).

## Revendications

1. Dispositif de grill, comprenant :
- une chambre à charbon de bois (12), dont les parois délimitent entièrement un espace intérieur pour le charbon de bois, avec au moins une paroi (48) constituée d'un tamis à mailles fines et avec au moins une ouverture d'aération (44) dans laquelle débouche une conduite d'alimentation en air (26, 32, 14), qui traverse une chambre d'allumage (14) pour un moyen d'allumage (36) et à laquelle un générateur de flux d'air (4) peut être raccordé ou est raccordé,
- une coque réfléchissante (21), dans laquelle la chambre à charbon de bois (12) est disposée, avec un côté intérieur réfléchissant la chaleur,
- une coque externe (8) dans laquelle la coque réfléchissante (21) est disposée, et
- une grille (6) qui recouvre la coque externe (8) sur le côté supérieur, **caractérisé en ce que**
la coque réfléchissante (21) est constituée d'un matériau plat flexible.

2. Dispositif de grill selon la revendication précédente, **caractérisé en ce que** la coque réfléchissante (21) peut être posée à plat et/ou peut être froissée à plat.

3. Dispositif de grill selon la revendication précédente, **caractérisé en ce que** la coque réfléchissante (21) est constituée d'une feuille d'aluminium et peut être pliée à plat et/ou froissée à plat.

4. Dispositif de grill selon la revendication précédente, **caractérisé en ce que** la coque réfléchissante (10) comprend des parois planes (21) constituées du matériau plat flexible, qui sont conçues ensemble en forme d'entonnoir.

5. Dispositif de grill selon l'une des revendications précédentes, **caractérisé en ce que** la coque externe (8) peut être posée à plat.

6. Dispositif de grill selon l'une des revendications précédentes, **caractérisé en ce que** la coque externe (8) est une boîte en carton.

7. Dispositif de grill selon l'une des revendications précédentes, **caractérisé en ce que** le générateur de flux d'air (4) peut être raccordé ou est raccordé à une ouverture (24) dans la coque externe (8) et **en ce qu'**un espace intermédiaire (26) forme, entre la coque externe (8) et la coque réfléchissante (10), une partie de la conduite d'air.

8. Dispositif de grill selon l'une des revendications précédentes, **caractérisé en ce que** la coque réfléchissante (10) comprend un fond (28) globalement plat avec une ouverture de passage (30) globalement centrale et **en ce qu'**une portion de la conduite d'alimentation en air (32) est rigide et débouche, sur le côté inférieur, dans la chambre d'allumage (14) et peut être emboîtée par le haut dans l'ouverture de passage (30).

9. Dispositif de grill selon l'une des revendications précédentes, **caractérisé en ce que** la coque réfléchissante (10) comprend un bord supérieur (50) qui peut être emboîté sur le bord supérieur (20) de la coque externe (8) à la manière d'un couvercle de boîte à chaussures.

10. Dispositif de grill selon l'une des revendications précédentes, **caractérisé en ce que** la grille (6) est constituée de métal étiré et comprend une rampe (54) pliée vers le haut et/ou un bord de collerette (52) plié vers le bas pour l'emboîtement sur la coque externe et/ou la coque réfléchissante (10, 50).
